Europäisches Patentamt

European Patent Office

Office européen des brevets

(11) Publication number: **0 366 362**
**A1**

## (12) EUROPEAN PATENT APPLICATION

(21) Application number: 89310776.3

(22) Date of filing: **19.10.89**

(51) Int. Cl.⁵: **B01D 17/022 , B01D 29/70**

(30) Priority: **26.10.88 GB 8825089**

(43) Date of publication of application:
**02.05.90 Bulletin 90/18**

(84) Designated Contracting States:
**BE DE ES FR GB GR IT NL SE**

(71) Applicant: **KALDAIR INTERNATIONAL LIMITED**
**Britannic House Moor Lane**
**London EC2Y 9BU(GB)**

(72) Inventor: **Cosgrove, Ronald Charles**
**7 Yarnham Close Four Marks**
**Alton Hampshire GU34 5DH(GB)**

(74) Representative: **Ryan, Edward Terrence et al**
**BP INTERNATIONAL LIMITED Patents &**
**Agreements Division Chertsey Road**
**Sunbury-on-Thames Middlesex, TW16**
**7LN(GB)**

(54) **Apparatus for filtering and coalescing liquids.**

(57) An apparatus for removing contaminants from a liquid having a tubular fibrous filter (3) formed of fibres (4) attached to end supports (5, 6) which are moveable axially relative to each other and are rotated relative to one another about the axis of the tubular filter and having motors (22, 23) for causing the relative movement of the end supports in which a sensor (24, 25) determines the torque applied by the motor causing rotation and a control means (28) stops the motor when the torque has reached a predetermined level.

FIG.1

## APPARATUS FOR FILTERING AND COALESCING LIQUIDS

The present invention relates to apparatus for filtering solids from liquids or for coalescing droplets of one liquid dispersed in another liquid.

EP 0 004 724 discloses an apparatus for removing contaminants from a liquid which comprises bundles of fibres aligned parallel to one another between two end plates. The end plates may be moved axially to stretch or compress the fibres. Liquid flows through the apparatus parallel to the fibre bundles.

EP 0 207 797 discloses another apparatus for removing contaminants from a liquid. This apparatus also comprises fibres connected at each end to end supports, which end supports can be moved away from or towards each other to place the fibres under tension or to relax any applied tension. The end supports can also be rotated relative to each other. The fibres are attached to the end supports so as to form a tube of fibres surrounding a central tubular core provided with perforations. The fibres are in turn surrounded by a perforated tube which restrains the fibres from radial movement (in relation to the axis of the tubular core). The liquid to be treated passes across the fibres between the central core and an outer compartment surrounding the fibres. In use the end supports are moved towards one another and rotated relative to one another to twist the fibres and to compress them against the perforated tube.

Our copending unpublished patent application (Case7075) discloses an apparatus for filtering and coalescing liquids in which the central perforated tube disclosed in EP O 207 797 is replaced by a helical spring which is so dimensioned that it does not close when the end supports are in their closest operational position and resists inward movement of the fibres in the fibrous filter when the end supports are moved axially towards each other and rotated to twist fibres.

In the arrangement shown in EP O 207 797 it is necessary to move the end supports relative to each other both longitudinally along the axis of the tubular filter and also to rotate them relative to each other. It would be possible to provide a single mechanism which by a single application of power would provide both the longitudinal and rotational movements. We have found however that by providing separate drives to give the longitudinal and rotational movements and by providing certain additional control facilities improved performance in filtration and coalescence can be obtained.

According to the present invention an apparatus for removing contaminants from a liquid, which apparatus comprises

A. a filtration device comprising:

(i) a casing,

(ii) a tubular fibrous filter within the casing, dividing the casing into two compartments, said fibrous filter

a) being formed of fibres attached at each end to first and second end supports,

b) the end supports being moveable axially relative to each other, and rotatable relative to one another about the longitudinal axis of the tubular fibrous filter, and

B. means for causing relative rotation and relative longitudinal movements of the end supports, characterized by:

a first motor for causing relative rotation of the end supports,

a second for causing longitudinal movement of the end supports,

a sensor connected to the first motor for sensing the torque applied by the first motor for causing relative rotation of the end supports, and

a control means for stopping the first motor when the torque has reached a predetermined level.

According to another aspect of the present invention a method of treating a fluid containing contaminants by

a) forming a packed bed of fibres in a tubular filter comprising fibres attached at each end to first and second end supports by relative movement of the end supports towards each other, and by rotating the end supports relative to each other,

b) passing a fluid containing contaminants through the packed fibre bed,

c) rotating the end supports relative to one another and moving them apart relative to each other so as to unpack the fibre bed, and

d) passing wash fluid through the unpacked fibre bed to remove contaminants, is characterized in that the end supports are rotated relative to each other to form a packed bed until a predetermined applied torque is reached.

There is an upper limit on the amount of torque which may be applied to produce relative rotation of the end supports. If an excessive amount of torque is applied the fibres will break. It has been found that the amount of relative rotation of the end supports without risking breakage of the fibres can be increased as the number of rotations is increased. When the bed is packed down the end supports are rotated relative to each other as well as being moved towards each other axially. It has been found that the amount of relative rotation of the end supports may be increased as the number of actuations is increased so giving better packing of the bed. By "actuation" we mean each occasion on which the fibres are caused to pack together by movement of the end supports towards each other and by relative rotation of the end supports. If the amount of relative rotation of the supports is set at a level below that of which there is a risk of breaking the fibres initially then the amount of relative rotation will be below the optimum value for use after a number of actuations.

Relative rotation of the end supports may take place during the backwashing operation. The backwashing step is initiated by rotating the end supports relative to each other and by moving them apart axially so as to unpack the bed. However improved results are obtained during backwashing if the end supports are caused to rotate relative to each other on either side of the position corresponding to having the fibres aligned parallel to the axis. This rotation during backwashing applies a squeezing force to the fibres which helps to remove contaminants. However initally the fibres are stiff because of the presence of contaminants, and the degree of rotation which can be safely applied is limited. As contaminants are removed the fibres become less stiff and the degree of rotation can be increased. If the amount of relative angular rotation is set at a fixed value so as to avoid damaging the fibres when backwashing starts it will not be sufficient to give maximum cleaning action as the fibres become less stiff.

It is a preferred feature of the present invention to carry out backwashing while rotating the end supports relative to each other about a position in which the fibres are aligned parallel to the axis of the tubular filter at intervals during the backwashing step, the rotation being carried out until a predetermined torque is reached. The amount of torque applied may be selected to be different from that applied during the packing step.

The present invention provides a method of obtaining closer control over the process for treating contaminated liquids by controlling the rotational movement on the basis of measuring torque rather than on the superficially simpler method of using a limit switch to detect a pre-set amount of angular rotation.

The present invention requires relative rotation of the end supports. In general it will be convenient to obtain this by keeping one end support fixed and rotating only the other end support.

In a preferred form of the present invention the second motor for causing relative longitudinal movement of the end supports also has a sensor for sensing the torque applied by the motor. The control means additionally has a means for detecting when the torque applied is above a predetermined level and is able to stop the second motor when the predetermined level of torque has been reached. The present invention is particularly suitable for use with filtration devises in accordance with copending application (Case 7075) in which a helical spring is used within the tubular filter to provide support. As disclosed in application no. (Case 7075) the helical spring may be arranged such that it is in the neutral state (i.e. neither extended or compressed) when the end supports are at their closest distance to each other. As the appropriate drive motor is actuated to move the end supports longitudinally apart the drive motor will have to apply a certain torque to extend the spring. As the spring becomes more extended there will come a point at which the fibres come into tension and there will be an increase in the rate at which the applied torque increases. Because the drive motor has already been loaded by the action of the spring this change in torque will take place at a relatively high torque level as opposed to a very low torque level which would be applied if there were no spring. Torque sensors are more accurate towards the mid point of their range rather than at the very beginning, i.e. around zero torque. The pre-loading of the drive motor because of the helical spring enables the torque measurement at the point at which the fibres come under tension to be made more accurately so that thedrive motor may be switched off before the fibres are extended excessively with risk of breakage.

The invention will now be described with reference to the accompanying drawings in which

Figure 1 is a cross-sectional view of one form of filtration device for use with the present invention,

Figure 2 is a diagramatic representation of a control and sensing system for use in the present inventions.

The apparatus comprises a casing (1), having a vent (2) at its upper end. The vent (2) will normally be closed off by a pressure relief valve or a pressure gauge in use. The casing is divided into two compartments by a tubular fibrous filter, indicated generally at (3). The fibrous filter comprise bundles of fibres (4) secured at each end to end supports (5) and (6). End support (5) is fixed to the casing (1). End support (6) is attached to to an actuating rod (7) by which can it can be moved axially towards end support (5) and also rotated relative to end support (5). A liquid inlet (8) is provided in casing (1), opening into the outer compartment surrounding the tubular filter. A liquid outlet (9) is provided in the base of the casing, opening into the compartment within the tubular filter.

A drain outlet (10) is provided through which the casing can be drained if required. A helical spring (11) is disposed within the space within the tubular filter (3). One end (12) of the spring (11) is anchored in an opening in fixed end support (5). The other end (13) is anchored in moveable end support (6).

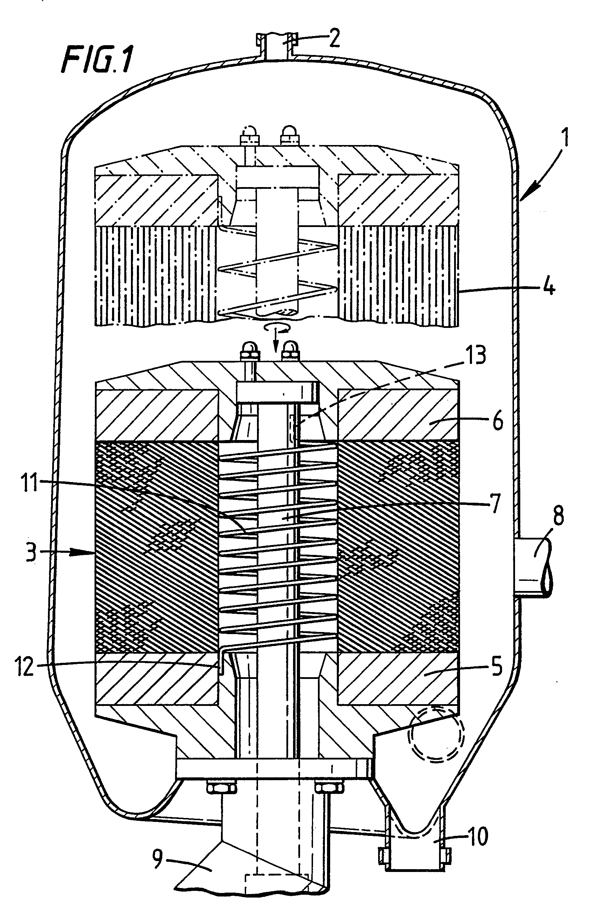

In use the moveable end support (6) is moved from the position shown in dotted lines in Figure 1 to the position shown in full lines by retraction and rotation of the actuating rod. As a consequence the fibres move from a position in which they are parallel to the axis of the filter to one in which they are inclined to the axis. As a result the individual fibres are forced closer together so increasing their efficiency at trapping particles in the fluid or coalescing droplets of immisicible liquid.

The movement of the actuating rod compresses the spring so that it continues to provide support over the whole length of the fibres without the complex mechanical arrangement shown in EP 0 207 797.

When the tubular fibrous filter is rotated and compressed the spring provides radial support for the stressed fibres and allows the end plates to rotate and compress the tubular fibrous bed by accepting torsion and compression within the spring due to the low stiffness of the spring in the torsional and axial axes but high rigidity in the axial direction.

When it is desired to clean the filter the actuating rod (7) is extended and rotated to return the moveable end support to the position shown in dotted lines. This increases the spacing between the fibres so facilitating backwashing.

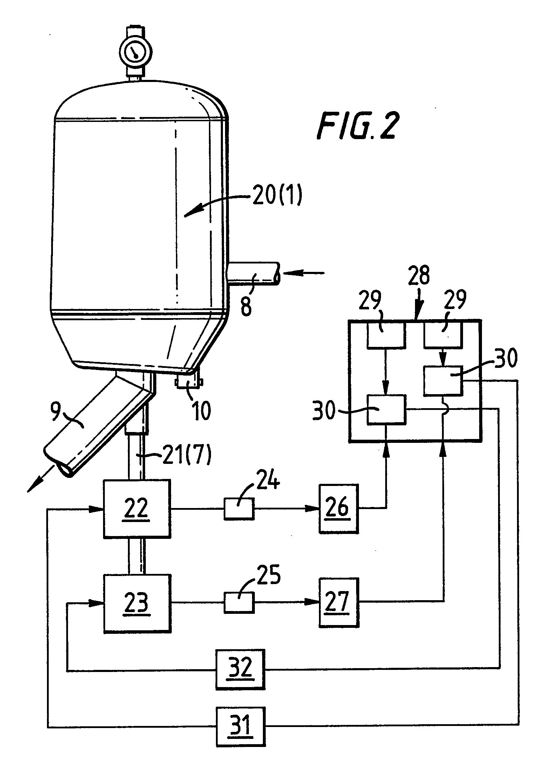

The control arrangement for the filtration device shown in Figure 1 is indicated in Figure 2. The filtration device (20) is provided with a shaft (21) corresponding to shaft (7) of Figure 1 for causing longitudinal movement of one end support towards the other (fixed end support) and for rotating one of the end supports relative to the other. The longitudinal movement of shaft (7) (21) is produced by a three phase motor (22) and the rotational motion is produced by another three phase motor (23). The torque exerted by motor (22) can be sensed by torque sensor (24) and the torque exerted by motor (23) can be sensed by torque sensor (25). The voltage signals produced by the torque sensors are proportional to the applied torque and are fed to the analogue-to digital convertors (26) and (27). the digital signals from the analogue to digital convertors are fed to a programmed logic controller (28). The programmed logic controller has electronic storage means (29) for holding the values corresponding to maximum desired torques. It further has electronic comparison means (30) for comparing the torque signals with predetermined values and the value held in the counting means and for issuing signals to controllers (31) and (32) which control the current to motors (22) and (23). The program logic controller (28) and the controllers (31) and (32) correspond to the control means required by the present invention. The programmable logic controller (28) is programmed so that the torque at which the motor rotating the end support at which the controller switched off the motor is set at a pre-determined value dependent on the degree of filter bed compaction required. Similarly the program logic controller (28) is programmed so that the motor controlling the longitudinal movement of the end plate is stopped when the pre-set maximum torque value is reached.

## Claims

1. An apparatus for removing contaminants from a liquid which comprises:
A. a filtration device comprising:
(i) a casing,
(ii) a tubular fibrous filter within the casing, dividing the casing into two compartments, said fibrous filter
a) being formed of fibres attached at each end to first and second end supports,
b) the end supports being moveable axially relative to each other, and rotatable relative to one another about the longitudinal axis of the tubular fibrous filter, and
B. means for causing relative rotation and relative longitudinal movements of the end supports, characterized by:
a first motor for causing relative rotation of the end supports,
a second motor for causing longitudinal movement of the end supports,
a sensor connected to the first motor for sensing the torque applied by the first motor for causing relative rotation of the end supports, and
a control means for stopping the first motor when the torque has reached a predetermined level.

2. An apparatus according to claim 1 wherein the second motor, for causing relative longitudinal movement of the end supports, also has a sensor for sensing the torque applied by the second motor, and the control means additionally has a means for detecting when the torque applied by the second motor is above a predetermined level and has means to stop the second motor when the predetermined level or torque has been reached.

3. An apparatus according to either of claims 1 or 2 wherein a helical spring is disposed within the tubular fibrous filter and is so dimensioned that it does not close when the end supports are in their closest operational position and resists inward movement of the fibres in the fibrous filter when the end supports are moved axially towards each other and rotated to twist the fibres, and in which the helical spring is in a neutral state when the end supports are at their closest distance to each other.

4. A method for treating a fluid containing contaminants by:

a) forming a packed bed of fibres in a tubular filter comprising fibres attached at each end to first and second end supports by relative movement of the end supports towards each other, and by rotating the end supports relative to each other,

b) passing a fluid containing contaminants through the packed fibre bed,

c) rotating the end supports relative to one another and moving them apart relative to each other so as to unpack the fibre bed, and

d) passing wash fluid through the unpacked fibre bed to remove contaminants,

is characterised in that the end supports are rotated relative to each other to form a packed bed until a predetermined applied torque is reached.

5. A method according to claim 4 wherein the end supports are rotated relative to one another at intervals while wash fluid is passed through the unpacked fibre bed to remove contaminants, the end supports being rotated relative to each other on either side of a position corresponding to the fibres being aligned parallel to the axis of the tubular filter until a predetermined applied torque is reached.

FIG.1

FIG.2

20(1)

8

29  28  29

30

30

9

21(7)

24

22        26

25

23        27

32

31

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 207 797 (THE BRITISH PETROLEUM CO.) * claims 1,10; figures 1-3 * | 1,4,5 | B 01 D 17/022 B 01 D 29/70 |
| D,A | EP-A-0 004 724 (THE BRITISH PETROLEUM CO.) * claims 1,10,14; figure * | 1,4 | |
| A | DE-A-2 922 552 (SCHDANOVSKIJ METALLURGITSCHESKIJ INSTITUT) * page 20; figures 1,6-12 * | 1,4 | |
| A | DE-A-2 922 549 (SCHDANOVSKIJ METALLURGITSCHESKIJ INSTITUT) * page 25; figures 1-9 * | 1,4 | |
| A | US-A-4 317 732 (W.A. SHOQUIST) * figures 1,3 * | 1 | |
| A | DE-C-1 007 294 (INGENIEURBUERO H. TEBBE) * claim 1; figure 2 * | 3 | TECHNICAL FIELDS SEARCHED (Int. Cl.5) B 01 D 17/022 B 01 D 17/04 B 01 D 29/70 |

The present search report has been drawn up for all claims

| Place of search | Date of completion of the search | Examiner |
|---|---|---|
| BERLIN | 22-12-1989 | KUEHN P |

EPO FORM 1503 03.82 (P0401)